# EUROPÄISCHE PATENTANMELDUNG

(11) **EP 1 217 398 A2**
(43) Veröffentlichungstag der Anmeldung: **26.06.2002**
(21) Anmeldenummer: 01125931.4
(22) Anmeldetag: 31.10.2001
(51) Int. Cl.: G02B 6/04, G02B 6/36

(54) **Verfahren zur Positionierung einer Vielzahl von Glasfaserenden in einer Matrixstruktur**

(30) Priorität: 16.11.2000 DE 10057127
(71) Anmelder: Schott Glas, 55122 Mainz (DE); CARL-ZEISS-STIFTUNG trading as Schott Glas, 55122 Mainz (DE)
(72) Erfinder: Olbricht, Kai, 46487 Wesel (DE); Schuster, Markus, 55126 Mainz (DE)
(74) Vertreter: Dr. Weitzel & Partner

(57) **Zusammenfassung**

Die Erfindung betrifft ein Verfahren zum Verbringen einer Vielzahl von Faserenden eines Bündels von Lichtwellenleitern, insbesondere von Glas-, Quarz-, oder Kunststoffasern in eine Vielzahl von vorgegebenen Positionen, umfassend folgende Schritte:
- die Glas-, Quarz-, oder Kunststoffaserenden werden auf eine Fixiereinrichtung umfassend eine Vielzahl von Öffnungen für die Glas-, Quarz- oder Kunststoffaserenden aufgebracht
- die Fixiereinrichtung und/oder die Vielzahl von Glas-, Quarz- oder Kunststoffaserenden werden derart bewegt, daß die Glas-, Quarz oder Kunststoffaserenden durch die Öffnungen der Fixiereinrichtung hindurchtreten, so daß die Glas-, Quarz oder Kunststoffaserenden in die vorgegebene Position gelangen.

## Beschreibung

Die Erfindung betrifft ein Verfahren zum Verbringen einer Vielzahl von Faserenden eines Bündels von Lichtwellenleitern, insbesondere Glas-, Quarz- oder Kunststoffasern in eine Vielzahl von vorgegebenen Positionen sowie ein Verfahren zur Herstellung eines mit einer Steckeinrichtung verbindbaren Glas-, Quarz- oder Kunststoffaserendes.

Bei Glasfaserkabeln mit einer Vielzahl von Glasfasern war es bisher üblich, die einzelnen Fasern manuell aufzugreifen und einzeln in eine vorgegebene Position zu verbringen.

Auf diese Art und Weise konnten beispielsweise Glasfasern nebeneinanderliegend, in einem eindimensionalen Array angeordnet und mit dem Stecker eines Glasfaserkabels verbunden werden.

Nachteilig an einem derartigen Prozeß war, daß dieser Prozeß für eine genaue Positionierung von vielen Glas-, Quarz- oder Kunststoffaserenden sehr aufwendig ist.

Insbesondere erlaubte es ein derartiges Verfahren nicht, ein zweidimensionales Glasfaser-Array mit beispielsweise 2 x 2 bis 40 x 40 Glasfasern in einen Stecker zu verbringen, so daß sich ein Glasfaserkabel mit einer Vielzahl von Glasfasern in einer zweidimensionalen, beispielsweise quadratischen oder rechteckigen Matrix ergibt. Insbesondere erlaubten die Verfahren gemäß dem Stand der Technik keine genaue Positionierung im Bereich von wenigen Mikrometern (µm) von sehr vielen Glasfaserenden mit geringem Abstand.

Aufgabe der Erfindung ist es somit, ein Verfahren anzugeben, mit dem diese Nachteile überwunden werden können, insbesondere ein Verfahren anzugeben, das eine sehr genaue Positionierung in einer zweidimensionalen Matrix mit Abstand der Faserenden von wenigen µm ermöglicht. Insbesondere soll hierdurch eine vereinfachte Punkt-Punkt-Zuordnung zweier Glasfaserenden ermöglicht werden. Desweiteren soll das Verfahren eine weitgehende Automatisierung der Herstellung von Glasfaserkabeln erlauben.

Erfindungsgemäß wird dies dadurch erreicht, daß die Faserenden auf eine Fixiereinrichtung, umfassend eine Vielzahl von Öffnungen für die Faserenden, aufgebracht werden und die Fixiereinrichtung oder die Faserenden oder Fixiereinrichtung und Faserenden derart bewegt werden, daß die Faserenden aufgrund der Bewegung durch die Öffnung der Fixiereinrichtung hindurchtreten und so in die durch die Öffnungen vorgegebene Position, beispielsweise innerhalb einer zweidimensionalen Matrix, gelangen.

Vorteil einer derartigen Lösung ist insbesondere, daß die einzelnen Fasern in sehr nahe beieinander liegende Positionen verbracht werden können, da bei einem derartigen Verfahren sehr enge Abstände, wie sie beispielsweise durch die Stegbreiten der Fixiereinrichtung vorgegeben sind, keine Probleme bei der Positionierung darstellen.

Mit dem erfindungsgemäßen Verfahren lassen sich Glasfaserenden auf < ± 2 µm genau in eine Position verbringen, wobei die einzelne Glasfaser mit Kern, Cladding und Schutzbeschichtung einen Durchmesser 20 µm, insbesondere 100 µm bis 1000 µm, insbesondere 260 µm aufweisen können. Die gestrippten Glasfaserenden ohne Schutzbeschichtung bestehend aus Kern und Cladding können einen Durchmesser im Bereich 50 bis 800 µm aufweisen.

Besonders vorteilhaft ist es, wenn die Glasfaserenden und/oder die Fixiereinrichtung periodisch bewegt, insbesondere in Schwingungen versetzt werden. Dies kann beispielsweise durch Rütteln geschehen.

Eine mögliche Ausgestaltung der Fixiereinrichtung besteht in der Ausbildung als Lochplatte, wobei die einzelnen Öffnungen durch Stege gebildet werden und die Stege einen festen Abstand aufweisen.

Bei einer derart ausgebildeten Lochplatte ist es von Vorteil, wenn der Abstand der Stege, die die einzelnen Öffnungen voneinander trennen, derart gewählt ist, daß nur genau ein Faserende die Öffnung passieren kann.

Alternativ zu einer Fixiereinrichtung mit fest vorgegebenen Öffnungsgrößen ist es auch möglich, eine Fixiereinrichtung zu schaffen, bei der die Öffnungsgrößen durch flexible Stege in einem vorgegebenen Bereich variiert werden können. Eine derartige Fixiereinrichtung erlaubt es, daß die einzelnen Faserenden zunächst in eine relativ breite Öffnung eingeführt werden können. Die Breite dieser Öffnungen darf aber andererseits maximal so gewählt werden, daß sie gerade das Eindringen einer zweiten Faser verhindert. Zur genauen Positionierung der einzelnen Fasern wird nach Durchführen der einzelnen Fasern deren Größe verkleinert.

Eine derartige Lösung hat gegenüber einer starren Matrix den Vorteil, daß es nahezu ausgeschlossen werden kann, daß einzelne Fasern, nicht durch die Löcher gelangen und in einem aufwendigen Nachbearbeitungsprozeß auf herkömmliche Art und Weise nachpositioniert werden müssen.

Ein weiterer Vorteil liegt darin, daß die Glasfasern auch durch mehrere solcher Fixiereinrichtungen geführt werden können, wobei die Breite der Öffnungen der einzelnen Fixiereinrichtungen individuell einstellbar ist.

Der Vorteil liegt insbesondere darin, daß durch ein Einstecken durch möglichst viele Platten die Auswahl der Einsteckvorgänge reduziert wird. Zur Vereinzelung einzelner Kabel bestehend aus je zwei Kochplatten können die Platten dann auseinandergezogen werden.

Neben dem erfindungsgemäßen Verfahren zur Positionierung stellt die Erfindung insbesondere auch ein Verfahren zur Herstellung eines mit einer Steckverbindung verbindbaren Glasfaserendes, das eine Vielzahl von einzelnen Glasfasern umfaßt, zur Verfügung.

Erst mit einer derartigen Montagetechnik wird es möglich, ein Glasfaserkabel bei vertretbarem Herstellaufwand mit einem zweidimensionalen Glasfaser-Array zur Verfügung zu stellen, das beispielsweise im Bereich der optischen Datenkommunikation eingesetzt werden kann.

Ein erfindungsgemäßes Verfahren zur Herstellung eines mit einer Steckeinrichtung verbindbaren Glasfaserendes umfaßt den Schritt des Positionieren der einzelnen Glasfasern mit Hilfe des erfindungsgemäßen Verfahrens, eine vorläufigen Fixierung der Faserenden, deren Positionierung und endgültige Fixierung. Die endgültige Fixierung der Faserenden kann beispielsweise durch Ausgießen mit einer Gießmasse und anschließendem Aushärten erreicht werden. Diese endgültige Fixierung kann beispielsweise in einen Stecker integriert werden.

Nach Einführen eines derartigen Endes eines Glasfaserkabels in eine Steckeinrichtung ist es für eine ausreichende optische Qualität vorteilhaft, daß die Glasfasern die nunmehr in einer zweidimensionalen Matrix angeordnet sind, geschliffen und poliert werden, so daß sich ein in einer Ebene angeordnetes Glasfaser-Array ergibt.

Vorteilhafterweise sind für eine genaue Positionierung die in einem Glasfaser-Array angeordneten Glasfaserenden einzelne Glasfaser ohne Schutzbeschichtung, d.h. die Glasfaserenden setzen sich lediglich zusammen aus dem Glasfaserkern und dem Cladding.

Als Gießmasse werden bevorzugt Kunststoff und/oder ein Kleber eingesetzt.

Die Erfindung soll nachfolgend anhand der Ausführungsbeispiele beschrieben werden. Obwohl die nachfolgenden Ausführungsbeispiele sich auf Glasfasern als Lichtwellenleiter beziehen, läßt sich das erfindungsgemäße Verfahren auch auf jegliche andere Art von Lichtwellenleiter, beispielsweise Quarz- oder Kunststoffasern anwenden, ohne daß von der Erfindung abgewichen wird.

Es zeigen:
- Figur 1: den Aufbau zur Durchführung des erfindungsgemäßen Verfahrens, Glasfasern mittels Bewegung zu positionieren.
- Figur 2a und 2b: eine Lochplatte mit flexiblen Lochöffnungen und Distanzhaltern, die im zusammengeschobenen Zustand einen definierten Abstand garantieren.
- Figur 3: ein mittels des erfindungsgemäßen Verfahrens hergestelltes Glasfaserkabel mit einer Vielzahl von Glasfasern, angeordnet in einer zweidimensionalen Matrix.

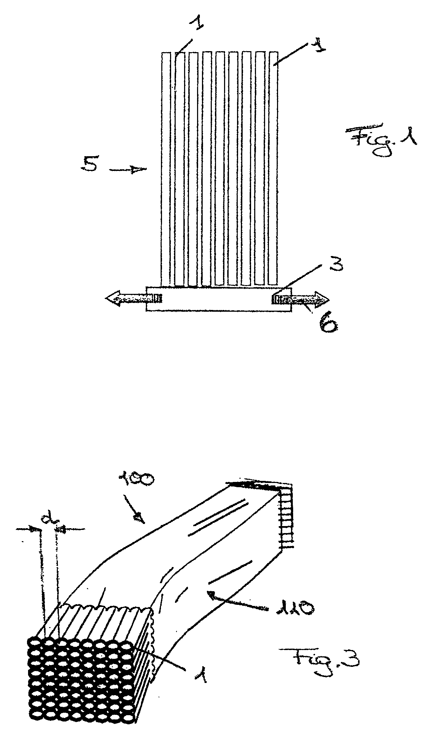

Figur 1 zeigt die Funktionsweise des erfindungsgemäßen Verfahrens zur Positionierung einer Vielzahl von Glasfaserelementen mit Hilfe einer beispielhaften Vorrichtung.

Deutlich zu erkennen sind die Vielzahl von Glasfaserenden 1 des Glasfaserkabels. Jede einzelne Glasfaser des Glasfaserkabel besteht aus einem Glasfaserkern, einem sogenannten Cladding bzw. Mantelglas sowie einer Schutzschicht, die das Cladding bzw. Mantelglas umgibt.

Zur Positionierung der einzelnen Glasfaserenden der Glasfaser mit Hilfe des erfindungsgemäßen Verfahrens wurde die Schutzschicht im Bereich der Faserenden 1 von den einzelnen Glasfasern entfernt. Die einzelnen Glasfaserenden werden auf eine Fixiereinrichtung 3 aufgebracht, die vorliegend als Lochplatte mit Stegen ausgebildet ist, wobei die Stege einen vorgegebenen Stegabstand aufweisen, so daß eine Öffnung mit konstantem Öffnungsdurchmesser ausgebildet wird.

Die Öffnungsgröße ist gerade so bemessen, daß maximal ein Faserende durch eine derartige Öffnung hindurchtreten kann.

Das Bündel 5 von Faserenden 1 wird auf die Lochplatte 3 aufgesetzt. Nun wird das Bündel von Glasfaserenden 1 und/oder die Lochplatte 3 wie mit dem Pfeil 6 angedeutet bewegt, beispielsweise in Vibrationen versetzt, so treten die einzelnen Glasfaserenden durch die Öffnungen hindurch, werden positioniert und von den Öffnungen der Platte nach ihrem Durchtreten durch dieselben vorläufig fixiert.

Im Idealfall fallen 100 % der gestrippten Fasern, das sind die Fasern ohne Schutzbeschichtung im Endbereich, durch die Löcher und diese füllen diese aus.

Sollten nicht alle Löcher ausgefüllt sein und einzelnen Fasern der Vielzahl von Glasfasern nicht durch die Lochplatte hindurchtreten, so können diese Einzelfasern, manuell nachverarbeitet werden.

Nachdem die einzelnen Glasfasern durch die Lochplatte in den vorgegebenen Positionen vorläufig fixiert wurden, werden die in einer geordneten Matrix, die durch die Öffnungen der Lochplatte vorgegeben sind, vorliegenden Glasfaserenden mittels einer Gießmasse endgültig fixiert. Bevorzugt werden die Faserenden mit einem Kunststoff/Kleber ausgegossen und anschließend ausgehärtet. Dadurch wird eine endgültige Fixierung der Faserenden in der gewünschten Position erreicht.

Anschließend kann das derart hergestellte Kabelende auf Maß geschliffen und poliert werden, so daß man ein in einer Ebene liegendes Faser-Array erhält.

Anstelle einer Lochblende mit fest vorgegebenen Öffnungsgrößen wäre auch eine flexible Matrix denkbar.

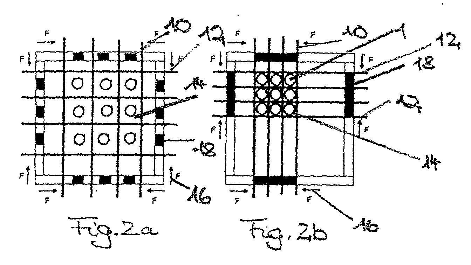

Eine mögliche Ausgestaltung einer derartigen flexiblen Matrix ist in den Figuren 2a und 2b dargestellt.

Die flexible Matrix besteht aus einem System von sich kreuzenden Stegen 10, 12, die eine Vielzahl von Öffnungen 14 in Matrixstruktur definieren. Der Abstand der Stege ist so bemessen, daß durch die Öffnungen 14 gerade das Eindringen einer zweiten Faser verhindert wird. Hierbei ist zu beachten, daß dies nur möglich ist, wenn die Schutzbeschichtung der Faser bezogen auf den Gesamtdurchmesser der Faser weniger als 50 % beträgt.

Nachdem die einzelnen Fasern in die Öffnungen 14 der flexiblen Matrix durch Rütteln oder auch manuelles Einstecken verbracht wurden, werden die flexiblen Stege in Pfeilrichtung 16 bis zum Anschlag 18 verfahren. Dies ist in Figur 2b dargestellt.

Die einzelnen Glasfaserenden sind dann dicht zu einer Matrix gepackt und haben einen Abstand, der der Stegbreite der einzelnen Stege 10, 12 entspricht.

Ebenso wie beim Verfahren mit starren Öffnungen werden bei der Verwendung einer flexiblen Matrix nach der vorläufigen Positionierung der Fixiereinrichtung diese mit einer Masse vergossen und sodann die mit einem Stecker verbundenen Kabelenden auf Maß geschliffen und poliert.

Möchte man ein Glasfaserkabel mit einem Stecker an beiden Enden herstellen, so werden die Faserbündel wie zuvor beschrieben hergestellt.

In Figur 3 ist beispielhaft ein Glasfaserkabel 100, das nach dem erfindungsgemäßen Verfahren hergestellt wurde, dargestellt. Das Glasfaserkabel 100 umfaßt eine Vielzahl von Glasfaserenden 1, die in einem Array angeordnet sind. Die Größe des Array's kann beispielsweise 10 x 10 oder 35 x 35 Glasfasern betragen oder ein nicht quadratisches Glasfaser-Array mit beispielsweise 16 x 32 Glasfasern sein.. Der Abstand d der einzelnen Faserkerne zueinander beträgt im vorliegenden Ausführungsbeispiel 125 µm, die Toleranz in der Ortsabweichung ± 2 µm. Die einzelnen Glasfasern setzen sich zusammen aus einem Glasfaserkern mit einem Durchmesser im Bereich von 50 µm, einem Cladding, das den Glasfaserkern umgibt, sowie einem Schutzmantel. Das Glasfaserkabel mit Schutzbeschichtung weist einen Durchmesser von ungefähr 110 bis 120 µm auf. Selbstverständlich sind auch Arrays anderer Geometrie oder mit Glasfasern anderer Abmessungen denkbar, ohne daß vom Gedanken der Erfindung abgewichen wird.

Die Vielzahl von Glasfasern umgibt eine Ummantelung 110.

Als Glasfasermaterial kann Quarzglas, andere Gläser oder ein Kunststoffmaterial verwendet werden. Die Glasfaseroberfläche umfaßt z.B. eine Acrylat-Beschichtung. Es können sowohl Multi-Moden wie auch Single-Moden-Fasern verwendet werden.

Ein komplettes Glasfaserkabel ergibt sich dann, wenn auf das Array von Glasfasern an beiden Enden jeweils ein Stecker aufgesetzt wird.

Mit dem erfindungsgemäßen Verfahren ist es erstmals möglich, ein Glasfaserkabel herzustellen, daß ein mehrdimensionales Matrix der beschriebenen Abmessungen und Präzession einzelner Glas-, Quarz- oder Kunststoffasern, in einer geordneten Anordnung umfaßt.

## Patentansprüche

1. Verfahren zum Verbringen einer Vielzahl von Faserenden (1) eines Bündels (5) von Lichtwellenleitern, insbesondere Glas-, Quarz- oder Kunststoffasern in eine Vielzahl von vorgegebenen Positionen, umfassend folgende Schritte:
1.1 die Glas-, Quarz- oder Kunststoffaserenden (1) werden auf eine Fixiereinrichtung (3) umfassend eine Vielzahl von Öffnungen für die Glas-, Quarz- oder Kunststoffaserenden aufgebracht
1.2 die Fixiereinrichtung (3) und/oder die Vielzahl von Glas-, Quarz- oder Kunststoffaserenden (1) werden derart bewegt, daß die Glas-, Quarz-oder Kunststoffaserenden (1) durch die Öffnungen der Fixiereinrichtung (3) hindurchtreten, so daß die Glas-, Quarz- oder Kunststoffaserenden in die vorgegebene Position gelangen.

2. Verfahren nach Anspruch 1, **dadurch gekennzeichnet, daß**
die Glas-, Quarz- oder Kunststoffaserenden (1) und/oder Fixiereinrichtungen (3) periodisch bewegt, insbesondere in Schwingung versetzt werden.

3. Verfahren nach einem der Ansprüche 1 bis 2, **dadurch gekennzeichnet, daß**
die Fixiereinrichtung (3) wenigstens einer starren Matrix mit Öffnungen (14), insbesondere eine Lochplatte umfaßt.

4. Verfahren nach Anspruch 3, **dadurch gekennzeichnet, daß**
der Abstand der Stege der Matrix fest ist und derart gewählt, daß nur genau ein Faserende (1) die Öffnung (14) durchdringen kann.

5. Verfahren nach Anspruch 4, **dadurch gekennzeichnet, daß**
der Abstand der Stege (10,12) < 100 µm ist.

6. Verfahren nach einem der Ansprüche 1 bis 2, **dadurch gekennzeichnet, daß**
die Fixiereinrichtung wenigstens eine flexible Matrix mit Öffnungen umfaßt, wobei die Größe der Öffnungen in einem vorgegebenen Bereich variiert werden kann.

7. Verfahren zur Herstellung eines mit einer Steckereinrichtung verbindbaren Glas-, Quarz oder Kunststoffaserendes eines Glas-, Quarz-, oder Kunststoffaserkabels, umfassend eine Vielzahl von einzelnen Fasern mit folgenden Schritten:
7.1 die Faserenden werden an eine vorgegebene Position verbracht, wobei die Positionierung der überwiegenden Zahl von Faserenden der Vielzahl von einzelnen Fasern des Glas-, Quarz- oder Kunststoffaserkabels mittels eines Verfahrens gemäß einem der Ansprüche 1 bis 8 vorgenommen wird
7.2 die Faserenden werden nach der Positionierung vorläufig fixiert
7.3 die Faserenden werden in der vorgegebenen Position endgültig fixiert.

8. Verfahren nach Anspruch 7, **dadurch gekennzeichnet, daß**
das endgültige Fixieren durch Ausgießen und anschließendes Aushärten erfolgt, wobei das Ausgießen mit einem Kunststoff und/oder Kleber als Gießmasse erfolgt.

9. Verfahren nach einem der Ansprüche 1 bis 8, **dadurch gekennzeichnet, daß**
die Faserenden Fasern ohne Schutzbeschichtung sind.

10. Verfahren nach Anspruch 9, **dadurch gekennzeichnet, daß**
die Schutzbeschichtung der Faser bezogen auf den Gesamtdurchmesser der Faser weniger als 50 % beträgt.

11. Verfahren nach einem der Ansprüche 7 bis 10, **dadurch gekennzeichnet, daß**
das Glas-, Quarz- oder Kunststoffaserende geschliffen und poliert wird, ergebend ein Glas-, Quarz- oder Kunststoffaser-Array.
